# DEMANDE DE BREVET EUROPEEN

(11) **EP 3 832 225 A1**
(43) Date de publication de la demande: **09.06.2021**
(21) Numéro de dépôt: 20211809.7
(22) Date de dépôt: 04.12.2020
(51) Int. Cl.: F24S 10/40, F24S 10/95, F24S 10/30, F24S 10/75, F24S 80/20, F28D 15/02

(54) **CAPTEUR THERMIQUE SOLAIRE, PANNEAU THERMIQUE SOLAIRE ET PROCÉDÉ DE CHAUFFAGE D'UN BÂTIMENT AVEC STOCKAGE CALORIFIQUE INTÉGRÉ**

(30) Priorité: 04.12.2019 FR 1913739
(71) Demandeur: EMV2, 09500 La Bastide Bousignac (FR)
(72) Inventeur: DELPEYROU, José, 11620 VILLEMOUSTAUSSOU (FR)
(74) Mandataire: Rhein, Alain

(57) **Abrégé**

L'invention concerne un capteur thermique solaire (4) comprenant un tube (40) qui s'étend entre une extrémité supérieure (41) ouverte et une seconde extrémité basse (42) correspondant à un fond fermé, le tube (40) comporte une double paroi, d'une part, une première paroi forme une chambre cylindrique (43) et délimite un absorbeur calorifique, et d'autre part, une seconde paroi qui ceinture la première paroi et délimite extérieurement le capteur thermique solaire (4), la seconde paroi joint la première paroi au niveau de l'extrémité supérieure (41) du tube (40) et s'étend parallèlement à la première paroi entre les deux extrémités (41, 42) du tube (40) formant un interstice cylindrique entre les deux parois, l'interstice étant placé sous vide, caractérisé en ce que l'extrémité supérieure (41) du tube (40) est close par un bouchon (5) hermétique permettant à l'absorbeur calorifique de contenir un fluide calorifique, le bouchon (5) s'étendant depuis une base (50) solidaire de l'extrémité supérieure (41) du tube (40) vers au moins une extrémité libre (51) qui est configurée pour s'étendre dans un échangeur thermique de sorte que le bouchon (5) transfère l'énergie calorifique emmagasinée par le fluide calorifique vers l'échangeur thermique.

L'invention se rapporte également à un panneau thermique solaire (1) comprenant le capteur thermique solaire (4) et un procédé de chauffage d'un bâtiment intégrant ce dernier.

## Description

[La présente invention se rapporte au domaine des énergies renouvelables et en particulier au domaine de l'énergie solaire.

De manière connue, il existe au moins deux technologies de capteur solaire. Une première technologie de capteur solaire transforme les photons de la lumière en électricité au travers de panneaux photovoltaïques. Alors qu'une seconde technologie, capte l'énergie solaire par rayonnement et la communique à un fluide caloporteur par transfert de chaleur au sein d'une enceinte hermétique. Dans cette optique, cette technologie utilise des capteurs solaires thermiques également appelés collecteurs thermiques d'énergie solaire.

Il existe d'ores et déjà des capteurs thermiques solaires intégrés à un panneau solaire thermique configuré pour chauffer de l'air qui est ensuite injecté au réseau aéraulique de chauffage d'un bâtiment.

Plusieurs types de panneau thermique solaire ont été développés à cet effet. En particulier, il existe une technologie qui utilise des capteurs thermiques solaires sous forme de tubes sous vide. Le tube sous vide s'étend entre deux extrémités, une première extrémité ouverte et une seconde extrémité fermée. Le tube sous vide est un tube en verre qui présente une double paroi. La double paroi comprend, d'une part, une première paroi intérieure qui forme une chambre cylindrique et délimite un absorbeur calorifique, et d'autre part, une seconde paroi extérieure ceinturant la première paroi et délimitant le diamètre extérieur du tube sous vide et donc du capteur thermique solaire. Les deux parois s'étendent entre chaque extrémité du tube de manière parallèle l'une à l'autre et forment un interstice qui est placé sous vide. Cet interstice est fermé au niveau de l'extrémité ouverte du tube, où les des parois se rejoignent.

Habituellement, les panneaux thermiques solaires qui emploient ce type de tube sous vide, comme capteur thermique solaire, comportent un caisson dont l'espace intérieur est divisé en deux chambres isolées l'une de l'autre. Plus spécifiquement, le caisson comprend, d'une part, une première chambre qui est connectée à un réseau aéraulique de récupération d'air froid d'un bâtiment, et d'autre part, une seconde chambre qui est connectée à un réseau aéraulique de distribution d'air chaud du bâtiment. Le panneau thermique solaire comprend un nombre déterminé de tube sous vide qui sont reliés de manière indépendante à chaque chambre du caisson. En pratique, chaque capteur thermique est approvisionné en air frais par un tube métallique qui traverse la chambre de distribution d'air chaud. Ce tube métallique fait office d'échangeur thermique, le caractère métallique facilite les échanges calorifiques. De plus, le tube métallique est ouvert dans la lumière du tube sous vide de sorte à libérer le flux d'air afin qu'il rejoigne la chambre de distribution d'air chaud. Au cours de son parcours entre la chambre d'air frais et la chambre de distribution d'air chaud, le flux d'air se charge en énergie calorifique, notamment lors de son transit dans la lumière du tube sous vide. A ce stade, l'échangeur thermique délivre de l'air frais descendant qui rencontre de l'air chaud ascendant déjà présent dans le tube sous vide. Ceci génère des pertes de charges thermiques importantes qui influencent de manière négative sur le rendement thermique du capteur thermique solaire.

Dans ce document on entend par rendement thermique d'un capteur solaire thermique, le taux de conversion de l'énergie calorifique, produit par le soleil en énergie calorifique, convertie en énergie calorifique de l'absorbeur calorifique du capteur solaire thermique. Il est à noter que l'énergie calorifique produite par le soleil s'exprime généralement en kilowatt heure par mètre carré et par an.

A titre informatif, l'énergie calorifique solaire est estimée, dans le sud de la France, à environ 1500 kwh/m²/par an. Ce qui constitut une source d'énergie calorifique considérable. Pour optimiser l'ensoleillement, il est préférable de poser ce type d'installations sur une façade orientée plein sud.

La présente invention vise à améliorer la technologie des installations solaires de chauffage d'un bâtiment. En particulier, l'invention cherche à optimiser le rendement thermique d'un panneau thermique solaire en optimisant le rendement de production d'énergie calorifique. L'invention s'inscrit également dans une démarche de réduction des coûts de fabrication en simplifiant la structure mécanique des installations solaires de chauffage d'un bâtiment.

A ces fins un premier aspect de la présente invention se rapporte à un capteur thermique solaire comprenant un tube qui s'étend entre une extrémité supérieure ouverte et une seconde extrémité basse correspondant à un fond fermé, le tube comporte une double paroi, d'une part, une première paroi forme une chambre cylindrique et délimite un absorbeur calorifique, et d'autre part, une seconde paroi qui ceinture la première paroi et délimite extérieurement le capteur thermique solaire, la seconde paroi joint la première paroi au niveau de l'extrémité supérieure du tube et s'étend parallèlement à la première paroi entre les deux extrémités du tube formant un interstice cylindrique entre les deux parois, l'interstice étant placé sous vide.

Le capteur thermique selon l'invention, se caractérise en ce que l'extrémité supérieure du tube est close par un bouchon hermétique permettant à l'absorbeur calorifique de contenir un fluide calorifique, le bouchon s'étendant depuis une base solidaire de l'extrémité supérieure du tube vers au moins une extrémité libre configurée pour s'étendre dans un échangeur thermique de sorte que le bouchon transfère l'énergie calorifique emmagasinée par le fluide calorifique vers l'échangeur thermique.

Le fluide calorifique contenu dans l'absorbeur calorifique emmagasine l'énergie calorifique provenant du rayonnement solaire et la restitue au niveau du bouchon. Ce système permet une restitution latente de l'énergie calorifique après l'arrêt de l'exposition au rayonnement solaire. Ceci permet de restituer une chaleur latente alors même que le capteur thermique solaire ne bénéficie plus d'une exposition au rayonnement solaire.

Selon le premier aspect de l'invention, le bouchon comporte plus particulièrement au moins un corps creux qui communique avec la chambre cylindrique de l'absorbeur calorifique de sorte que le fluide calorifique circule entre le corps creux et l'absorbeur calorifique, le corps creux s'étendant depuis la base vers au moins une extrémité libre.

Une autre caractéristique du premier aspect de l'invention se caractérise en ce que le corps creux comprend un nombre déterminé d'ailettes creuses qui s'étendent au-delà du tube, chaque ailette communicante avec la chambre cylindrique de l'absorbeur calorifique directement ou via le corps creux, le fluide calorifique circulant ainsi entre chaque ailette et la chambre cylindrique de l'absorbeur calorifique.

Selon un premier mode de réalisation du premier aspect de l'invention, le corps creux est de préférence formé par un cylindre qui s'étend selon un axe longitudinal depuis la base du bouchon vers une extrémité libre, le cylindre comprend un nombre déterminé d'ailettes radiales creuses qui s'étendent, d'une part, longitudinalement, entre la base du bouchon et l'extrémité libre du corps creux, et d'autre part, radialement dans une direction radiale à l'axe longitudinal du cylindre, la lumière de chaque ailette radiale communiquant avec la lumière du corps creux.

Selon un second mode de réalisation du premier aspect de l'invention, le bouchon comporte un nombre déterminé d'ailettes tubulaires à lumière creuse, chaque ailette s'étend depuis une première extrémité qui est disposée au niveau de la base du bouchon vers une extrémité libre fermée, la lumière de chaque ailette étant connectée à la chambre cylindrique de l'absorbeur calorifique de sorte que le fluide calorifique circule entre chaque ailette et l'absorbeur calorifique. De préférence, le capteur thermique solaire comprend une entretoise configurée pour maintenir à distance les ailettes les unes et des autres de sorte à former un peigne de transfert calorifique. Avantageusement, le peigne de transfert calorifique permet d'optimiser la surface d'échanges calorifique du bouchon.

Selon une autre caractéristique de l'invention, le fluide calorifique est constitué par de l'eau glycolée. Alternativement, le fluide calorifique peut être constitué par un gaz inerte, tel que l'air, l'argon, l'azote etc.

Selon une caractéristique du premier aspect de l'invention, l'absorbeur calorifique comporte une matrice accumulatrice d'énergie calorifique configurée pour que le fluide calorifique circule au travers de la matrice.

Selon une première variante, la matrice accumulatrice d'énergie calorifique est formée par des granulés répartis autour d'au moins une colonne de circulation de fluide calorifique, la colonne de circulation qui s'étend longitudinalement dans l'absorbeur calorifique.

Selon une seconde variante, la matrice est formée par un corps possédant des pores communicants les uns à avec les autres afin de ménager des canaux de circulations de fluide calorifique.

Il est à noter qu'une fluide calorifique gazeux ou liquide peut être utilisé en combinaison de la matrice accumulatrice.

De préférence, la matrice comporte un matériau à base de pierres naturelles choisies parmi la liste suivante : granit, diorite, basalte, grès, marbre ou un mélange de ces matériaux.

Un second aspect de l'invention concerne un panneau thermique solaire comprenant au moins un capteur thermique solaire défini selon le premier aspect de l'invention. Le panneau thermique solaire se caractérise en ce que le bouchon du capteur solaire thermique est saillant d'un échangeur thermique.

Selon le deuxième aspect de l'invention, l'échangeur thermique est formé par un caisson comprenant, d'une part, un conduit d'arrivée d'air frais, l'air frais se réchauffant au contact du bouchon du capteur thermique solaire, et d'autre part, un conduit d'évacuation d'air chaud, les conduits d'arrivée et d'évacuation étant reliés à un système de chauffage d'un bâtiment ou d'un local.

Un troisième aspect de l'invention concerne un procédé de chauffage d'un bâtiment, le procédé comportant :
- une étape de fourniture d'au moins un panneau solaire thermique comprenant, d'une part, au moins capteur thermique solaire défini selon le premier aspect de l'invention, et d'autre part, un échangeur thermique à air dans lequel s'étend au moins une partie du capteur thermique solaire ;
- une étape de connexion de l'échangeur thermique à un réseau aéraulique de chauffage du bâtiment ;
- une étape d'alimentation de l'échangeur thermique en air frais issue du réseau aéraulique du bâtiment ;
- une étape de montée en température du fluide calorifique contenu dans l'absorbeur thermique ;
- une étape de convection naturelle du fluide calorifique réchauffé vers le bouchon du capteur thermique solaire ;
- une étape de transfert d'énergie calorifique depuis le capteur thermique solaire, via le bouchon, vers l'air en circulation dans l'échangeur thermique ; et
- une étape de réinjection, de l'air réchauffé dans l'échangeur thermique, vers le réseau aéraulique de chauffage du bâtiment.

D'autres particularités et avantages apparaitront de la description détaillée, qui suit, de deux exemples de réalisation, non limitatifs, de l'invention qui est illustré aux figures 1 à 7 placées en annexe et dans lesquelles :
[Fig. 1] est une représentation en perspective d'un panneau thermique solaire conforme à un premier exemple de réalisation de l'invention ;
[Fig. 2] est une représentation d'une vue de haut d'un côté d'un caisson d'échanges thermiques du panneau thermique solaire de la figure 1 ;
[Fig. 3] est une autre représentation de la figure 2 ;
[Fig. 4] est une représentation d'un capteur thermique solaire équipé d'un bouchon échangeur calorifique conforme à second exemple de réalisation de l'invention ;
[Fig. 5] est une représentation d'une coupe du caisson intégrant le bouchon échangeur thermique illustré à la figure 4 ;
[Fig. 6] est une vue éclatée d'un bouchon échangeur thermique et d'un écarteur conforme au second exemple de réalisation de l'invention ; et
[Fig. 7] est une vue assemblée de la figure 6.

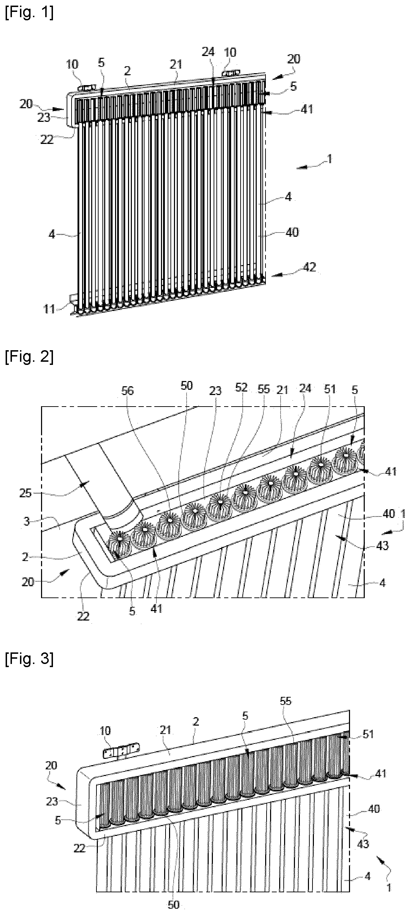

Comme illustré aux figures 1 à 7, l'invention a trait à un panneau thermique solaire 1. Le panneau thermique solaire 1 selon l'invention est plus particulièrement conçu pour être intégré à un système de chauffage d'un bâtiment. A cet effet, le panneau 1 comprend un caisson 2. Dans cet exemple, le caisson 2 est monté en façade 3 ou en toiture d'un bâtiment. Le caisson 2 est isolé d'un point de vue thermique. Ceci contribue à optimiser le rendement thermique du panneau thermique solaire 1.

Le caisson 2 s'étend longitudinalement entre deux extrémités 20. Ici, le caisson 2 est quadrangulaire. Le caisson 2 est délimité, d'une part, supérieurement par une paroi supérieure 21, et d'autre part, inférieurement par une paroi inférieure 22 opposée de la paroi supérieure 21. De plus, le caisson 2 est délimité latéralement par des parois latérales 23. Dans l'exemple des figures 1 à 3, le caisson 2 est solidaire d'une façade 3 d'un bâtiment au travers d'une paroi latérale 23. A cet effet, le panneau thermique solaire 1 comporte des moyens de fixations mécaniques 10. Les moyens de fixations mécaniques 10 peuvent être indifféremment de plusieurs types.

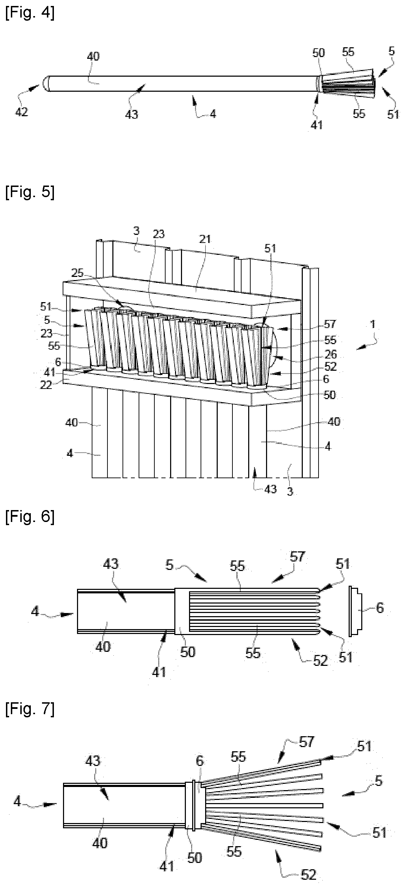

Le caisson 2 comprend intérieurement en outre une chambre 24. La chambre 24 est délimitée par la face interne des parois 21, 22, 23 du caisson 2. La chambre 24 définit un échangeur thermique du panneau thermique solaire 1. Dans cet objectif, d'une part, la chambre 24 est reliée à une première extrémité 20 à un conduit d'admission d'air frais 26. Le conduit d'admission d'air frais 26 est lui-même connecté à un réseau aéraulique de récupération d'air froid du bâtiment. D'autre part, la chambre 24 est reliée à un conduit d'évacuation d'air chaud 25 (illustré aux figures 3 et 5). Le conduit d'évacuation d'air chaud 25 est lui-même connecté à un réseau aéraulique de distribution d'air chaud du bâtiment.

Selon l'invention, l'air frais issu du bâtiment est réchauffé directement au sein du caisson 2 avant d'être renvoyé dans le réseau aéraulique de chauffage du bâtiment. De préférence, le flux d'air qui transite dans la chambre 24 est pulsé afin de fournir une convection forcée du flux d'air en transit dans la chambre 24 ou dans le caisson 2. Le flux d'air est pulsé de manière classique à l'aide de ventilateurs disposés en amont et/ou en aval respectivement du conduit d'arrivée d'air frais et du conduit d'évacuation d'air chaud 25.

A ces fins et comme cela est illustré à figure 1, le panneau solaire thermique 1 comprend au moins un capteur thermique solaire 4. De préférence, le panneau 1 comprend un nombre déterminé de capteurs thermiques solaires 4. Dans le présent exemple, chaque capteur thermique solaire 4 est solidaire du caisson 2. Plus particulièrement, chaque capteur thermique solaire 4 est solidaire de la paroi inférieure 22 du caisson 2.

Il est à noter que le caisson 2 peut prendre toutes autres formes adéquates à supporter un ou plusieurs capteur(s) thermique(s) solaire(s) 4.

Le capteur thermique solaire 4 selon l'invention correspond à un tube sous vide 40 connu de l'art antérieur. Le tube sous vide 40 s'étend entre une extrémité supérieure 41 ouverte et une seconde extrémité 42 basse correspondant à un fond fermé.

Comme décrit dans l'art antérieur, le tube 40 comporte une double paroi, d'une part, une première paroi forme une chambre cylindrique 43 et délimite un absorbeur calorifique. Cette première paroi peut être recouverte extérieurement par un revêtement métallique afin notamment d'augmenter la conductivité thermique. La seconde paroi du tube 40 ceinture la première paroi et délimite extérieurement le capteur thermique solaire 4. La seconde paroi joint la première paroi au niveau de l'extrémité supérieure 41 du tube 40 et s'étend parallèlement à la première paroi entre les deux extrémités 41, 42 du tube 40 formant un interstice cylindrique entre les deux parois. L'interstice est avantageusement placé sous vide afin d'isoler l'absorbeur calorifique.

Dans l'exemple illustré aux figures 1 à 3 et 5, chaque tube 4 est monté traversant de la paroi inférieure 22 du caisson 2. De fait, l'extrémité supérieure 41 du tube 40 est disposée de façon saillante dans la chambre 24. Il est à noter que l'extrémité basse 42 de chaque tube 40 peut être solidarisé à la façade à l'aide d'un support 11 (illustré à la figure 1).

Selon l'invention, l'extrémité supérieure 41 du tube 40 est close par un bouchon hermétique 5. Le bouchon 5 permet au tube 40 de former un absorbeur calorifique qui contient un fluide calorifique. Le bouchon 5 s'étend depuis une base 50 solidaire de l'extrémité supérieure 41 du tube 40 vers au moins une extrémité libre 51 s'étendant dans la chambre 24. Ainsi, l'extrémité libre 51 du bouchon 5 est saillante dans l'échangeur thermique définit par la chambre 24. Comme illustré aux figures 1 à 3, le bouchon 5 du capteur thermique solaire 1 est saillant de l'échangeur thermique du panneau thermique solaire 1.

Selon cette configuration, le bouchon 5 transfère l'énergie calorifique emmagasinée par le fluide calorifique vers l'échangeur thermique. Le fait de limiter la surface d'échange thermique au bouchon 5 contribue à augmenter la diffusion de chaleur latente lorsque l'ensoleillement est stoppé.

Afin d'améliorer le transfert d'énergie calorifique, le bouchon 5 est réalisé dans un matériau qui présente des propriétés de conductivité thermique. De préférence, le matériau utilisé possède également des propriétés d'élasticité afin de se dilater au contact du fluide calorifique réchauffé. A titre indicatif, le bouchon 5 peut être formé d'un matériau à base de silicone. En effet, les matériaux siliconés présentent l'avantage de posséder les propriétés d'élasticité et de conductions thermiques requises pour mettre en oeuvre l'invention. En effet, les dérivés de silicone présentent une résistance à la rupture comprise entre 10 kN/m et 40kN/m. Par ailleurs, le silicone ne dégage pas de particules nocives

Comme illustré aux figures 1 à 7, le bouchon 5 comporte au moins un corps creux 52. Le corps creux 52 communique avec la chambre cylindrique 43 de l'absorbeur calorifique. De ce fait, le fluide calorifique circule entre le corps creux 52 et l'absorbeur calorifique. A cet effet, le bouchon 5 comprend une base 50 montée solidaire de l'extrémité supérieure 41 du tube 40 sous vide. Selon cette configuration, le corps creux 52 s'étend depuis la base 50 du bouchon 5 vers au moins une extrémité libre 54.

Avantageusement, le corps creux 52 comprend un nombre déterminé d'ailettes 55. A titre indicatif, dans l'exemple des figures 5 à 7, le corps creux 52 comporte sept ailettes 55. Chaque ailette 55 est creuse, il est ainsi possible de les qualifier d'ailettes 55 tubulaires. L'ailette 55 tubulaire peut posséder une section transversale de différentes formes telles que : circulaire, laminaire, oblongue, lenticulaire, rectangulaire, ovale etc. Dans tous les cas, chaque ailette 55 s'étend au-delà du tube sous vide 40. Ainsi, dans le cadre du panneau thermique solaire 1 de l'invention, chaque ailette creuse est disposée de manière saillante dans la chambre 24 qui définit l'échangeur thermique. En particulier, chaque ailette 55 s'étend depuis la base 50 du bouchon 5 ou depuis le corps creux 52 du bouchon 5 en direction d'au moins une extrémité libre 51 du bouchon.

Selon l'invention, chaque ailette 55 communique avec la chambre cylindrique 43 de l'absorbeur calorifique. Cette communication peut être direct ou via le corps creux 52. Selon cette configuration, le fluide calorifique circule entre chaque ailette 55 et la chambre cylindrique 43 de l'absorbeur calorifique. La circulation de fluide calorifique se déroule selon une convection naturelle : le fluide le plus chaud se déplaçant vers le haut pour entrer dans le corps creux 52 et/ou les ailettes 55 du bouchon 5 qui sont saillants de la chambre 24 formant l'échangeur thermique.

Selon un premier exemple de réalisation de l'invention illustré aux figures 2 et 3, le corps creux 52 comprend par un cylindre 56. Selon cet exemple, le corps creux 52 comprend également des ailettes 55 radiales. Le cylindre 56 s'étend selon un axe longitudinal depuis la base 50 du bouchon 5 vers une extrémité libre 51. Avantageusement, le cylindre 56 comprend un nombre déterminé d'ailettes 55 radiales. Chaque ailette 55 radiale s'étend, d'une part, longitudinalement entre la base 50 du bouchon 5 et l'extrémité libre 51 du bouchon 5, et d'autre part, radialement selon une direction radiale à l'axe longitudinal du cylindre 56. Le corps creux 52 et chaque ailette comportent respectivement une lumière. La lumière de chaque ailette 55 radiale communique avec la lumière du corps creux 52. Ainsi, le fluide calorifique peut circuler, via le cylindre 56 du corps creux 52, depuis la chambre cylindrique 43 de l'absorbeur calorifique vers la lumière de chaque ailette 55 radiale.

Selon un second exemple de réalisation de l'invention illustré aux figures 4 à 7, le bouchon 5 comporte un nombre déterminé d'ailettes 55. Chaque ailette 55 comporte une lumière creuse. La lumière de chaque ailette 55 est connectée à la chambre 24 de l'absorbeur calorifique de sorte que le fluide calorifique circule entre chaque ailette 55 et l'absorbeur calorifique. Comme pour le premier exemple, le fluide calorifique circule entre l'absorbeur calorifique et chaque ailette 55 par convection naturelle.

Selon cet exemple, chaque ailette 55 s'étend depuis une première extrémité qui est disposée au niveau de la base 50 du bouchon 5 vers une extrémité libre 51. Ici, chaque ailette 55 possède une extrémité libre 51 qui lui est propre. Selon cette configuration, le bouchon 5 comporte autant d'extrémités libres 51 qu'il possède d'ailettes 55. Bien entendu, chaque extrémité libre 51 est fermée afin de contenir le fluide calorifique.

Avantageusement comme illustré aux figures 6 et 7, le bouchon 5 peut comprendre une entretoise 6 configurée pour maintenir à distance les ailettes 55 les unes des autres. L'entretoise 6 assure la création d'un peigne 57 de transfert calorifique. Le peigne 57 contribue à augmenter, au sein de la chambre 24, la surface d'échanges calorifiques entre le bouchon 5 et le flux d'air pulsé qui transite dans la chambre 24. Le peigne 57 permet ainsi d'optimiser le rendement thermique du panneau thermique solaire 1.

Dans cet exemple l'entretoise 6 peut être formée par une pièce de type bague configurée pour être enfilée sur le bouchon 5. A ces fins, l'entretoise 6 comporte un nombre déterminé de perçage dont le diamètre est configuré pour être enfilé sur une ailette 55. L'entretoise 6 comporte autant de perçage que le bouchon 5 ne comporte d'ailettes 55. Dans ce contexte, lorsque l'entretoise 6 est enfilée sur le bouchon 5 et positionnée au niveau de la base 50 du bouchon 5, les ailettes 55 sont écartées au niveau de leur première extrémité et forment un peigne 57 évasé (illustré à aux figures 5 et 7). Il est à noter que les dimensions de l'entretoise 6 sont adaptées aux dimensions de l'extrémité supérieure 41 du tube 40 sur lequel l'entretoise est positionnée.

Il est à noter que les deux exemples de réalisation du bouchon 5 permettent de mettre en oeuvre l'invention. La demanderesse a cependant observé de meilleur rendement thermique en utilisant le bouchon 5 du second exemple de réalisation de l'invention (illustré aux figures 4 à 7). Dans les deux cas, les ailettes 55 se dilatent sous l'effet de la dilatation du fluide calorifique qui est due à sa montée en température. La dilatation des ailettes 55 est permise par les propriétés d'élasticité du matériau dans lequel est réalisé le bouchon 5. De même, les autres parties du bouchon 5 se dilatent au contact du fluide calorifique.

Quelque soit l'exemple de réalisation de l'invention, les ailettes 55 du bouchon 5 s'étendent sur au moins 80% de la distance entre la paroi inférieure 22 et la paroi supérieure 21 du caisson 2. Cette caractéristique contribue à augmenter la surface d'échange calorifique au sein de l'échangeur thermique du panneau thermique solaire 1.

A l'inverse d'un caloduc qui transfère l'énergie calorifique par changement de phase d'un fluide calorifique, l'absorbeur calorifique contient un fluide calorifique qui absorbe l'énergie calorifique et la diffuse par convection thermique. Dès lors afin d'emmagasiner un maximum d'énergie calorifique, il est avantageux d'utiliser un fluide calorifique dont la valeur du point d'ébullition est supérieure à la température à laquelle le fluide calorifique est porté lorsqu'il est contenu dans le tube 4. La demanderesse a observé que le fluide calorifique, contenu dans un absorbeur calorifique, conforme à l'invention, est porté à des températures comprises entre 100 et 120 °C. En conséquence, selon l'invention le fluide calorifique possède de préférence un point d'ébullition supérieure à 120°C. De préférence, le fluide calorifique possède un point d'ébullition supérieur à 150°C. De préférence, le fluide calorifique possède un point d'ébullition supérieur à 170°C. De préférence, le fluide calorifique est un fluide calorifique qui possède un point d'ébullition supérieur ou égale à 180°C. A titre indicatif, il est possible d'utiliser de l'eau glycolée ou des huiles minérales. En effet, l'eau glycolée comporte un point d'ébullition de 180°C. L'eau glycolée peut comporter du propylène glycol ou de l'éthylène glycol.

Lorsque l'eau glycolée contenue dans un capteur thermique solaire 4 est exposée au rayonnement solaire, sa température est portée à une température supérieure à 110°C en quelques minutes. Dans ces conditions la demanderesse a observé que l'eau glycolée continue à diffuser de la chaleur pendant une durée comprise entre 5 heures à 8 heures après arrêt de l'ensoleillement. Avantageusement, cela permet de continuer à chauffer un bâtiment en cas de baisse de l'ensoleillement et/ou après le coucher de soleil. Il est à noter que l'isolation du tube sous vide 40 contribue à conserver l'énergie calorifique emmagasinée dans le liquide calorifique. En particulier, le rayonnement infrarouge du fluide calorifique dû à sa montée en température est confiné par le revêtement métallique qui recouvre la première paroi du tube sous vide. Le capteur thermique solaire 4 selon l'invention joue également un rôle de stockage de l'énergie calorifique emmagasinée par l'absorbeur calorifique. Cette énergie calorifique est stockée en maintenant le fluide calorifique à température lorsque l'exposition aux rayonnements solaires cesse.

Selon une autre possibilité de l'invention, le fluide calorifique est constitué par un gaz inerte. Le gaz inerte peut être constitué d'un gaz choisi parmi la liste suivante : de l'air, de l'azote, de l'argon ou un mélange de ces gaz.

Selon une caractéristique non illustrée de l'invention, l'absorbeur calorifique peut comporter une matrice accumulatrice d'énergie calorifique. Cette matrice est configurée pour que le fluide calorifique circule au travers de la matrice. Avantageusement, la matrice permet d'emmagasiner de l'énergie calorifique et de la restituer dès lors que l'exposition aux rayons de soleil décline.

Il est à noter qu'il est possible d'utiliser en combinaison de la matrice un fluide calorifique liquide ou gazeux. Néanmoins, le déplacement un fluide calorifique gazeux par convection naturelle au travers de la matrice s'avère plus aisé.

Selon une première variante, la matrice accumulatrice d'énergie calorifique est formée par des granulés. Les granulés peuvent posséder un calibre compris entre 5 mm et 10 mm. Par calibre, on entend les dimensions hors tout de chaque granulé. Pour un granulé sphérique, le diamètre correspondrait au calibre du granulé. Pour un granulé quadrangulaire, le calibre correspondrait aux dimensions de la plus grande diagonale. Afin de permettre la circulation du fluide calorifique, les granulés ne sont pas tassés.

De préférence, les granulés sont répartis autour d'au moins une colonne de circulation de fluide calorifique. La colonne de circulation s'étend longitudinalement dans l'absorbeur calorifique. Lorsque l'air est utilisé comme fluide calorifique, il est alors possible de qualifier la colonne de circulation de colonne d'air. L'utilisation de granulés contribue à augmenter la surface d'échange calorifique entre la matrice et le fluide calorifique.

A cet effet, la matrice comporte une grille tubulaire. A titre indicatif, la grille tubulaire peut posséder un diamètre de section compris entre 10 mm et 30 mm, de préférence, le diamètre la section est compris entre 15 mm et 25 mm. Plus particulièrement, une section de 20 mm est tout à fait envisageable pour réaliser la grille tubulaire. Selon cette variante, les granulés sont répartis autour de la grille tubulaire. Dans l'hypothèse où l'absorbeur calorifique comporterait plusieurs colonnes d'air, chaque colonne d'air comporterait une grille tubulaire. Avantageusement, la grille permet au fluide de calorifique de circuler

Selon une seconde variante, la matrice est formée un corps possédant des pores communicants les uns à avec les autres. La communication entre les pores permet de ménager des canaux de circulations de fluide calorifique. Le diamètre des pores peut être compris entre 1 mm et 10 mm. Selon cette variante, se sont les pores qui augmente la surface d'échange entre la matrice et le fluide calorifique.

Il est à noter qu'un même absorbeur calorifique peut comporter une première matrice en corps poreux dans le fond de l'absorbeur calorifique et une seconde matrice faite de granulés surplombant la première matrice. Selon l'invention, cette configuration peut être inversée.

Quelque soit la variante, la matrice comporte un matériau à base de pierres naturelles choisies parmi la liste suivante : granit, diorite, basalte, grès, marbre ou un mélange de ces matériaux.

Lorsque la matrice comprend des granulés, ces derniers peuvent être issu de broyat de pierres naturelles précédemment décrites. A titre d'exemple, la diorite offre une capacité thermique volumétrique de 3 MJ/M³/K (mégajoules par mètre cube par kelvin). En comparaison, l'eau possède une capacité thermique volumétrique de 4 MJ/M³/K, qui est légèrement supérieure à celle de la diorite. De fait, la diorite constitue un accumulateur calorifique quasi équivalent à l'eau. L'utilisation de pierres naturelles permet d'obtenir une capacité d'accumulation d'énergie calorifique performante qui de même ordre que les capacités de l'eau. Ces matériaux constituent par conséquent une alternative crédible.

Lorsque la matrice est constituée par un corps poreux, ce dernier peut être réalisé en matériau de pierre reconstitué. C'est-à-dire, que la poudre de pierre est associée à un matériau rigidifiant qui forme la structure la matrice. A titre indicatif, il est possible d'utiliser du plâtre ou bien des matériaux polymériques tels que le polystyrène expensé etc.

En outre l'invention concerne également un procédé de chauffage d'un bâtiment.

Le procédé de chauffage comporte une étape de fourniture d'au moins un panneau thermique solaire 1 conforme à l'invention. De préférence, le panneau thermique solaire 1 comprenant au moins un capteur thermique solaire 4 selon l'invention. De préférence, le panneau thermique solaire 1 comprend un nombre déterminé de capteur thermique solaire 4. En outre, le panneau thermique solaire 1 qui est fourni possède également un échangeur thermique à air dans lequel s'étend au moins une partie du capteur thermique solaire 4.

Le procédé de chauffage comporte une étape de connexion de l'échangeur thermique à un réseau aéraulique de chauffage du bâtiment.

Le procédé comporte une étape d'alimentation de l'échangeur thermique en air frais issue du réseau aéraulique du bâtiment. L'air frais est pulsé de manière à générer une convection forcée d'air au sein de l'échangeur thermique.

Le procédé comporte une étape de montée en température du fluide calorifique contenu dans l'absorbeur thermique. Cette étape est réalisée par absorption de l'énergie calorifique du rayonnement solaire.

Le procédé comporte une étape de convection naturelle du fluide calorifique réchauffé vers le bouchon 5 du capteur thermique solaire 4.

Selon l'invention, le procédé comporte une étape d'expansion du bouchon 5 qui permet d'augmenter la surface d'échange entre le flux d'air pulsée et chaque bouchon 5. L'expansion du bouchon 5 est due à la convection naturelle du fluide calorifique et à sa dilatation due à sa montée en température.

Le procédé comprend une étape de transfert d'énergie calorifique depuis le capteur thermique solaire 4, via le bouchon 5, vers l'air en circulation dans l'échangeur thermique. Il est à noter que l'expansion du bouchon 5 et notamment de ses ailettes 55 permet d'optimiser la surface d'échange calorifique au sein de l'échangeur thermique formé par la chambre 24.

Le procédé comporte une étape de réinjection, de l'air réchauffé dans l'échangeur thermique, vers le réseau aéraulique de chauffage du bâtiment.

## Revendications

1. Capteur thermique solaire (4) comprenant un tube (40) qui s'étend entre une extrémité supérieure (41) ouverte et une seconde extrémité basse (42) correspondant à un fond fermé, le tube (40) comporte une double paroi, d'une part, une première paroi forme une chambre cylindrique (43) et délimite un absorbeur calorifique, et d'autre part, une seconde paroi qui ceinture la première paroi et délimite extérieurement le capteur thermique solaire (4), la seconde paroi joint la première paroi au niveau de l'extrémité supérieure (41) du tube (40) et s'étend parallèlement à la première paroi entre les deux extrémités (41, 42) du tube (40) formant un interstice cylindrique entre les deux parois, l'interstice étant placé sous vide, **caractérisé en ce que** l'extrémité supérieure (41) du tube (40) est close par un bouchon (5) hermétique permettant à l'absorbeur calorifique de contenir un fluide calorifique, le bouchon (5) s'étendant depuis une base (50) solidaire de l'extrémité supérieure (41) du tube (40) vers au moins une extrémité libre (51) qui est configurée pour s'étendre dans un échangeur thermique de sorte que le bouchon (5) transfère l'énergie calorifique emmagasinée par le fluide calorifique vers l'échangeur thermique.

2. Capteur thermique solaire (4) selon la revendication 1, **caractérisé en ce que** le bouchon (5) comporte au moins un corps creux (52) qui communique avec la chambre cylindrique (24) de l'absorbeur calorifique de sorte que le fluide calorifique circule entre le corps creux (52) et l'absorbeur calorifique, le corps creux (52) s'étendant depuis la base (50) vers au moins une extrémité libre (51).

3. Capteur thermique solaire (4) selon la revendication 2, le corps creux (52) comprenant un nombre déterminé d'ailettes (55) creuses qui s'étendent au-delà du tube (40), chaque ailette (55) communicant avec la chambre cylindrique (24) de l'absorbeur calorifique directement ou via le corps creux (52), le fluide calorifique circulant ainsi entre chaque ailette (55) et la chambre cylindrique (24) de l'absorbeur calorifique.

4. Capteur thermique solaire (4) selon la revendication 3, le corps creux (52) étant formé par un cylindre (56) qui s'étend selon un axe longitudinal depuis la base (50) du bouchon (5) vers une extrémité libre (51), le cylindre (56) comprend un nombre déterminé d'ailettes (55) radiales creuses qui s'étendent, d'une part, longitudinalement, entre la base (50) du bouchon (5) et l'extrémité libre (51) du corps creux (52), et d'autre part, radialement dans une direction radiale à l'axe longitudinal du cylindre (56), la lumière de chaque ailette (55) radiale communiquant avec la lumière du corps creux (52).

5. Capteur thermique solaire (4) selon l'une des revendications 1 à 3, le bouchon (5) comporte un nombre déterminé d'ailettes (55) tubulaires à lumière creuse, chaque ailette (55) s'étend depuis une première extrémité qui est disposée au niveau de la base (50) du bouchon (5) vers une extrémité libre (51) fermée, la lumière de chaque ailette (55) étant connectée à la chambre cylindrique (24) de l'absorbeur calorifique de sorte que le fluide calorifique circule entre chaque ailette (55) et l'absorbeur calorifique.

6. Capteur thermique solaire (4) selon la revendication 5, **caractérisé en ce qu'**il comprend une entretoise (6) configurée pour maintenir à distance les ailettes (55) les unes et des autres de sorte à former un peigne (57) de transfert calorifique.

7. Capteur thermique solaire (4) selon l'une des revendications 1 à 6, **caractérisé en ce que** le fluide calorifique est constitué par de l'eau glycolée.

8. Capteur thermique solaire (4) selon l'une des revendications 1 à 6, **caractérisé en ce que** le fluide calorifique est constitué par un gaz inerte.

9. Capteur thermique solaire (4) selon la revendication 8, **caractérisé en ce que** le fluide calorifique est constitué par de l'air.

10. Capteur thermique (4) selon l'une des revendications 1 à 9, **caractérisé en ce que** l'absorbeur calorifique comporte une matrice accumulatrice d'énergie calorifique configurée pour que le fluide calorifique circule au travers de la matrice.

11. Capteur thermique solaire (4) selon la revendication 10, **caractérisé en ce que** la matrice accumulatrice d'énergie calorifique est formée par :
- des granulés répartis autour d'au moins une colonne de circulation de fluide calorifique, la colonne de circulation qui s'étend longitudinalement dans l'absorbeur calorifique , ou
- un corps possédant des pores communicants les uns à avec les autres afin de ménager des canaux de circulations de fluide calorifique.

12. Capteur thermique (4) selon l'une des revendications 10 à 11, **caractérisé en ce que** la matrice comporte un matériau à base de pierres naturelles choisi parmi la liste suivante : granit, diorite, basalte, grès, marbre ou un mélange de ces matériaux.

13. Panneau thermique solaire (4) comprenant au moins un capteur thermique solaire (1) selon l'une des revendications 1 à 12, **caractérisé en ce que** le bouchon (5) du capteur solaire thermique (1) est saillant d'un échangeur thermique.

14. Panneau thermique solaire (4) selon la revendication 13, **caractérisé en ce que** l'échangeur thermique est formé par un caisson (2) comprenant, d'une part, un conduit d'arrivée d'air frais (26), l'air frais se réchauffant au contact du bouchon (5) du capteur thermique solaire (1), et d'autre part, un conduit d'évacuation d'air chaud (25), les conduits d'arrivée (26) et d'évacuation (25) étant reliés à un système de chauffage d'un bâtiment ou d'un local.

15. Procédé de chauffage d'un bâtiment, le procédé comportant :
- une étape de fourniture d'au moins un panneau solaire thermique (1) comprenant, d'une part, au moins capteur thermique solaire (4) selon l'une des revendications 1 à 12, et d'autre part, un échangeur thermique à air dans lequel s'étend au moins une partie du capteur thermique solaire (4) ;
- une étape de connexion de l'échangeur thermique à un réseau aéraulique de chauffage du bâtiment ;
- une étape d'alimentation de l'échangeur thermique en air frais issue du réseau aéraulique du bâtiment ;
- une étape de montée en température du fluide calorifique contenu dans l'absorbeur thermique ;
- une étape de convection naturelle du fluide calorifique réchauffé vers le bouchon (5) du capteur thermique solaire ;
- une étape de transfert d'énergie calorifique depuis le capteur thermique solaire, via le bouchon (5), vers l'air en circulation dans l'échangeur thermique ; et
- une étape de réinjection, de l'air réchauffé dans l'échangeur thermique, vers le réseau aéraulique de chauffage du bâtiment.
